# FASCICULE DE BREVET EUROPEEN

(11) **EP 1 473 503 B1**
(45) Date de publication et mention de la délivrance du brevet: **08.03.2006**
(21) Numéro de dépôt: 04290934.1
(22) Date de dépôt: 08.04.2004
(51) Int. Cl.: F16L 11/115, B21D 53/36

(54) **Conduit souple à ondulations équipé d'au moins un anneau métallique de maintien et son procédé de fabrication.**
Gewellter Schlauch mit zumindest einem metallischen Verstärkungsring und Verfahren zu dessen Herstellung.
Corrugated flexible pipe with a reinforcing metal ring and method for manufacturing said pipe.

(30) Priorité: 30.04.2003 FR 0305349
(43) Date de publication de la demande: 03.11.2004
(73) Titulaire: HUTCHINSON, 75008 Paris (FR)
(72) Inventeur: Oesterle, Pascal, 37530 Nazelles-Negron (FR); Tavin, Gérard, 45200 Montargis (FR)
(74) Mandataire: Jacquard, Philippe Jean-Luc

(56) Documents cités:
- EP-A- 0 518 665
- EP-A- 0 634 593
- FR-A- 1 327 689
- GB-A- 412 428
- GB-A- 611 998
- US-A- 1 345 971
- US-A- 2 490 513
- US-A- 3 167 324
- US-A- 4 372 013

## Description

La présente invention concerne un conduit souple à ondulations équipé d'au moins un anneau métallique fermé présentant un bord interne arrondi.

La présente invention trouve application particulièrement dans l'industrie des composants pour automobiles, mais les milieux industriels, médicaux, agroalimentaires, cosmétiques, etc. peuvent également être concernés.

Des conduits souples à ondulations de section sensiblement circulaire, réalisés en matériau élastomère, par exemple en caoutchouc, sont couramment utilisés pour le transport de fluides (air, liquide de refroidissement, etc.), particulièrement dans les moteurs de véhicules automobiles. Pour en empêcher l'écrasement quand ils sont emmenés à fléchir, les conduits souples à ondulations sont généralement associés à des anneaux de maintien métalliques disposés dans les « creux » des ondulations, c'est à dire en correspondance des minima du diamètre de la section du conduit. Ces anneaux, qui sont le plus souvent réalisés en acier inoxydable, présentent généralement un bord interne, en contact avec le conduit souple à ondulations, lisse et arrondi, dont le plus petit rayon de courbure est de l'ordre de 1 mm. Ceci permet de ne pas endommager le matériau élastomère qui constitue le conduit souple à ondulations, même dans les conditions de température élevée et de fortes vibrations rencontrées dans un environnement moteur. A titre d'exemple, un conduit souple à ondulations peut être amené à fonctionner dans une plage de températures comprise entre -30°C et +175°C, être soumis à des vibrations de fréquence comprise entre 30 et 200 Hz avec une pression interne de l'ordre de 1,5 bars qui s'applique sur le bord interne des anneaux de maintien ; sa durée de vie doit pouvoir être de l'ordre de 15 ans.

Actuellement ces anneaux de maintien sont réalisés à partir d'un fil métallique de section circulaire. Le fil est spiralé, coupé, redressé, soudé et ébavuré. Les anneaux ainsi obtenus sont ensuite contrôlés visuellement pour éliminer ceux qui présentent des défauts, notamment un état de surface imparfait au niveau de la soudure, susceptible d'engendrer une usure précoce du conduit souple à ondulations. Enfin, les anneaux sont montés sur la surface externe de conduits souples à ondulation pour y assurer une fonction de maintien.

Ce procédé est coûteux et limité en productivité. De plus, il pose des problèmes de fiabilité liés à la tenue de la soudure et à l'usure du caoutchouc à cause de l'irrégularité de la surface de l'anneau au niveau de la soudure.

Un but de la présente invention est de proposer un conduit souple à ondulations équipé d' au moins un anneau métallique fermé de maintien, susceptible d'être produit par un procédé de fabrication qui soit plus fiable, moins coûteux et mieux adapté à des volumes de production élevés par rapport aux procédés connus de l'art antérieur.

Un autre but de la présente invention est de proposer un conduit souple à ondulations équipé d'au moins un tel anneau métallique fermé, qui présente en outre des meilleures propriétés mécaniques à quantité de matière égale par rapport aux anneaux connus de l'art antérieur.

La présente invention concerne également un procédé de fabrication d'un tel conduit.

Un objet de la présente invention est un conduit souple à ondulations équipé d'au moins un anneau métallique fermé, caractérisé en ce que la forme dudit anneau est définie par la révolution autour d'un axe d'un contour ouvert ayant une épaisseur, comportant un fond arrondi et deux branches latérales, ledit fond constituant le bord interne de l'anneau, destiné à être en contact avec ledit conduit souple à ondulations.

Avantageusement, ledit anneau métallique fermé ne comporte pas de soudure.

Selon un mode de réalisation de l'invention, lesdites deux branches latérales sont parallèles entre elles et perpendiculaires audit axe de révolution.

Selon un autre mode de réalisation de l'invention, lesdites deux branches latérales convergent symétriquement par rapport à un plan perpendiculaire audit axe de révolution.

Selon un autre mode de réalisation de l'invention, lesdites deux branches latérales convergent de façon non symétrique.

Selon un autre mode de réalisation de l'invention, lesdites deux branches latérales convergent de façon à former un arc de circonférence correspondant à un angle proche de 360°.

Selon un autre mode de réalisation de l'invention, ledit contour ouvert a une forme spiralée.

Selon des caractéristiques avantageuses :
- ledit fond arrondi présente un rayon de courbure d'au moins 1 mm.
- l'épaisseur dudit contour qui constitue ledit anneau est plus petite que ledit rayon de courbure dudit fond arrondi.
- ledit anneau est en acier inoxydable.

Un autre objet de la présente invention est un procédé de fabrication d'un tel conduit, caractérisé en ce que la phase de production dudit anneau comporte au moins une étape de déformation d'une pièce en forme de rondelle ou de cylindre présentant deux bords opposés, de manière à produire un rapprochement desdits deux bords opposés et donner ainsi à ladite pièce une forme concave vers l'extérieur dudit anneau.

Dans un mode particulier de réalisation dudit procédé, ladite pièce est en forme de rondelle, lesdits bords opposés constituant un bord interne et un bord externe, et ladite étape de déformation comporte le soulèvement dudit bord interne et son rabattement sur ledit bord externe.

Avantageusement, dans ce mode particulier de réalisation dudit procédé, ladite pièce en forme de rondelle est découpée d'une feuille de métal.

Dans un autre mode particulier de réalisation dudit procédé, ladite pièce en forme de cylindre est une tranche découpée d'un tube de métal.

Dans ce mode particulier de réalisation dudit procédé, ladite étape de déformation de ladite pièce en forme de cylindre comporte le rabattement vers l'extérieur desdits deux bords opposés, ce qui conduit à leur rapprochement et à l'écrasement de ladite pièce.

Ledit procédé peut comporter également une opération de découpe desdits bords opposés.

Ledit procédé peut comporter également une opération d'ébavurage desdits bords opposés.

Ledit procédé peut comporter également une opération de recuit de ladite pièce.

Selon différents modes de réalisation dudit procédé, ladite étape de déformation peut être effectuée par emboutissage, formage ou hydroformage.

Eventuellement ladite étape de déformation peut être effectuée à chaud.

D'autres caractéristiques, détails et avantages de l'invention ressortiront à la lecture de la description faite en référence aux dessins annexés donnés à titre d'exemple.
- La figure 1 montre une coupe longitudinale d'un conduit souple à ondulations avec des anneaux de maintien du type connu de l'art antérieur.
- Les figures 2A et 2B montrent respectivement une vue de face et en coupe d'un anneau de maintien du type connu de l'art antérieur, constitué par un fil métallique soudé à ses extrémités.
- La figure 3 montre un schéma du procédé de fabrication d'anneaux à partir d'un fil métallique, connu de l'art antérieur.
- Les figures 4A-4D montrent différentes vues d'un anneau métallique fermé selon la présente invention.
- La figure 5 montre, sous forme d'organigramme, un schéma générale du procédé de fabrication d'anneaux à partir de métal en feuilles ou en tubes, objet de la présente invention.
- Les figures 6A-6G se réfèrent aux différentes étapes d'un mode particulier de réalisation d'un procédé de fabrication des anneaux à partir de métal en feuilles selon la présente invention.
- Les figures 7A-7C se réfèrent aux différentes étapes d'un mode particulier de réalisation du procédé de fabrication des anneaux à partir de métal en feuilles.
- Les figures 8A-8E montrent des vues en coupes de différentes variantes d'anneaux métalliques fermés selon la présente invention.

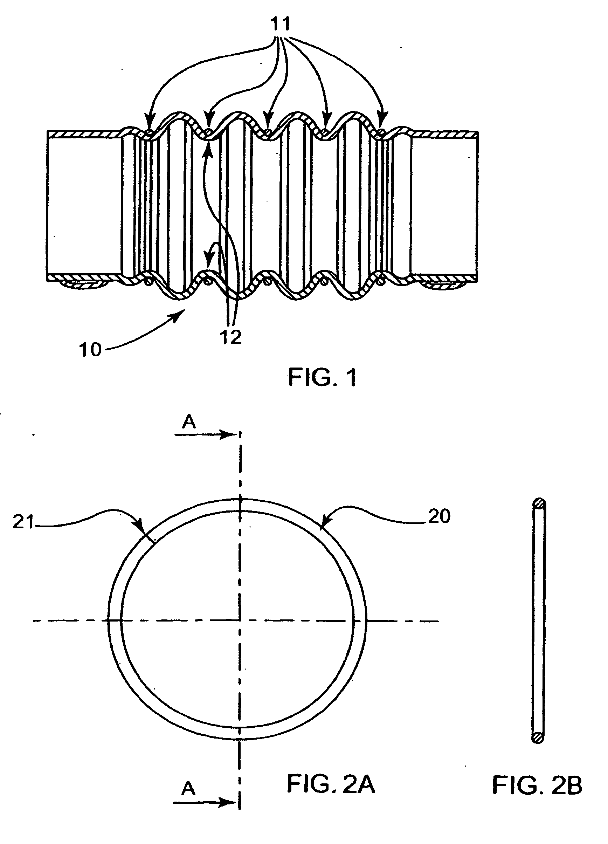

La figure 1 montre une coupe longitudinale d'un conduit souple à ondulations 10 avec des anneaux de maintien 11 positionnés en correspondance des « creux » 12 des ondulations. Les anneaux 11 sont constitués par un fil à section circulaire soudé à ses extrémités selon la technique connue de l'art antérieur.

Les figures 2A et 2B montrent respectivement une vue de face et une coupe d'un anneau 20 constitué par un fil à section circulaire soudé à ses extrémités 21 selon la technique connue de l'art antérieur.

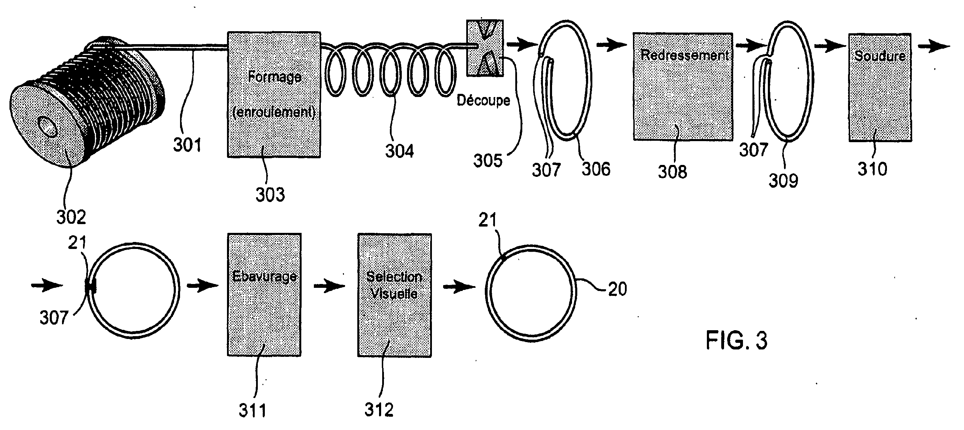

La figure 3 montre un schéma du procédé de fabrication d'anneaux à partir d'un fil métallique à section circulaire. Le fil 301 est fourni par une bobine 302; il subit une première opération de formage 303 qui l'enroule pour former une hélice 304 qui est ensuite découpée, étape 305 du procédé, pour former des anneaux ouverts 306. Les extrémités 307 de ces anneaux 306 ne se joignant pas, il est nécessaire de les redresser lors d'une deuxième opération de formage 308 pour obtenir des anneaux ouverts 309 prêts pour être soudés. Après l'opération de soudure 310, les anneaux subissent un ébavurage 311 et une sélection visuelle 312.

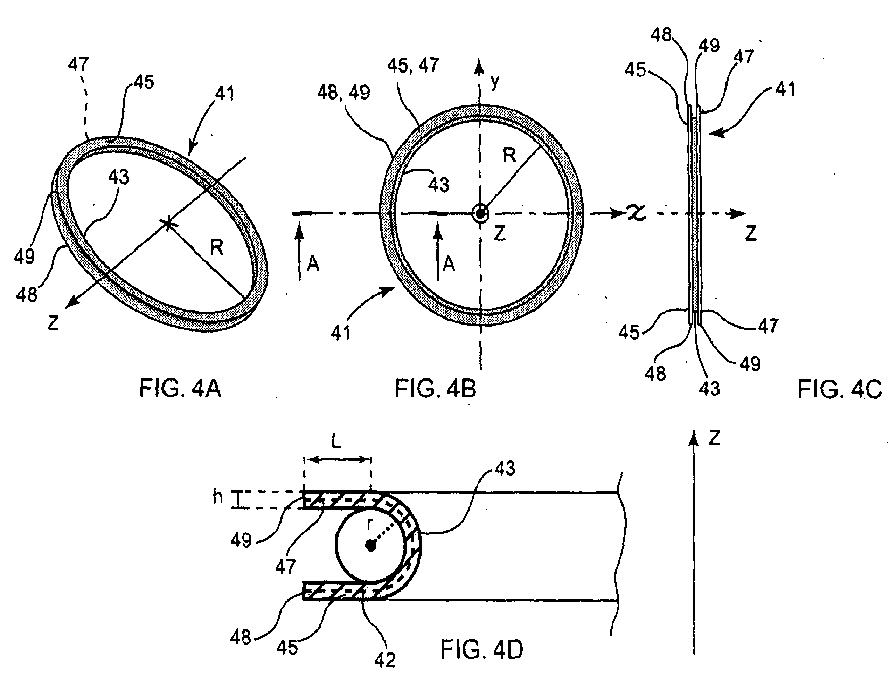

Les figures 4A-4D montrent respectivement une vue isométrique, une vue de front, une vue de profil et une vue en coupe d'un anneau métallique fermé 41 selon un mode particulier de réalisation de la présente invention. La forme dudit anneau est définie par la révolution autour d'un axe z d'un contour ouvert 42 ayant une épaisseur h, présentant un fond arrondi 43 en forme de « c » et deux branches latérales 45 et 47, ledit fond 43 constituant le bord interne de l'anneau. Dans le cas présent, le rayon R de l'anneau est de 25 mm et le rayon de courbure r dudit fond arrondi 43 est de 1 mm ; la valeur de r est importante, car elle doit être suffisante à éviter l'endommagement du conduit souple à ondulations 11 sur lequel ledit anneau 41 est destiné à être monté. La longueur L desdites branches latérales 45 et 47, ici 3 mm, détermine la résistance dudit anneau 41 à l'écrasement et à l'ovalisation. L'état de finition des bords 48, 49 desdites branches latérales 45, 47 n'est pas critique, car lesdits bords ne viennent jamais en contact avec ledit conduit souple à ondulations 11. En plus de sa facilité de fabrication, un tel anneau 41 présente des avantages intrinsèques, notamment une plus grande résistance à l'écrasement et à l'ovalisation à quantité de matière égale et l'absence d'affaiblissement dû à la soudure par rapport à un anneau 20 connu de l'art antérieur. En outre, la résistance mécanique dudit anneau 41 dépend essentiellement de la longueur desdites branches latérales 45 et 47 et non du rayon de courbure r. Contrairement au cas d'un anneau 20, qui a nécessairement la forme d'un tore, il est par exemple possible de réaliser un anneau 41 avec un rayon de courbure r relativement petit et qui présente néanmoins une résistance élevée, grâce à des branches latérales 45 et 47 particulièrement longues.

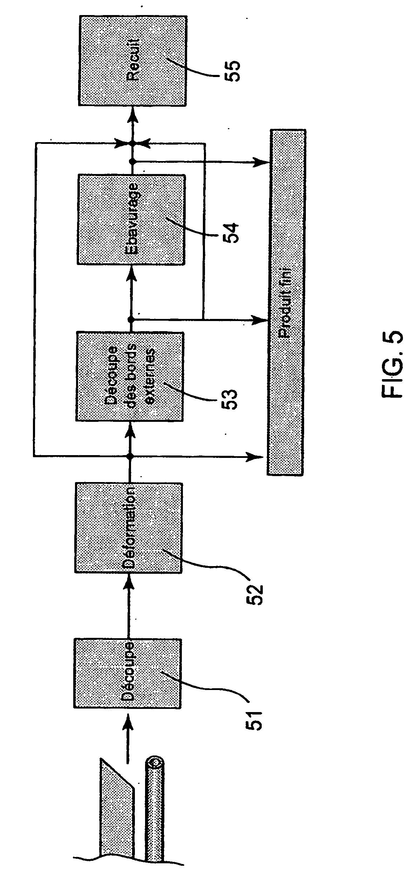

La figure 5 montre, sous forme d'organigramme, un schéma du procédé de fabrication d'anneaux à partir de métal en feuilles ou en tubes, selon la présente invention. La première étape 51 est la découpe de rondelles dans une feuille métallique ou de tranches d'un tube métallique. Suivent une ou plusieurs étapes de formage 52, une découpe 53 des bords externes pour réduire le diamètre externe de l'anneau, un ébavurage 54 desdits bords externes et une étape 55 de recuit pour réduire l'écrouissage des anneaux. Les trois dernières étapes peuvent ne pas être effectuées, au moins pour certaines applications. En particulier, l'étape 55 de recuit n'est pas nécessaire si le formage 52 est effectué à chaud.

Le procédé de fabrication de conduits souples à ondulation équipés d'anneaux de maintien selon l'invention comporte, en plus de la phase de fabrication des anneaux, décrite ci-dessus, une phase de fabrication des conduits souples proprement dits, connue de l'art antérieur, et une phase d'assemblage, également connue.

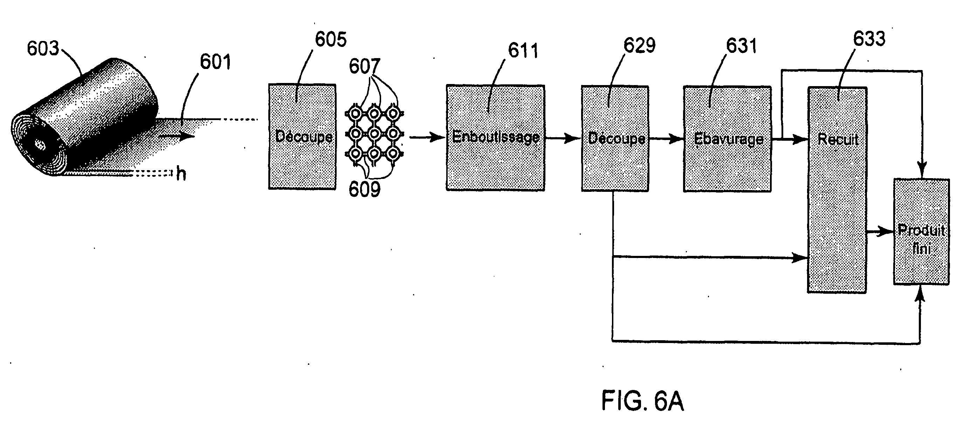

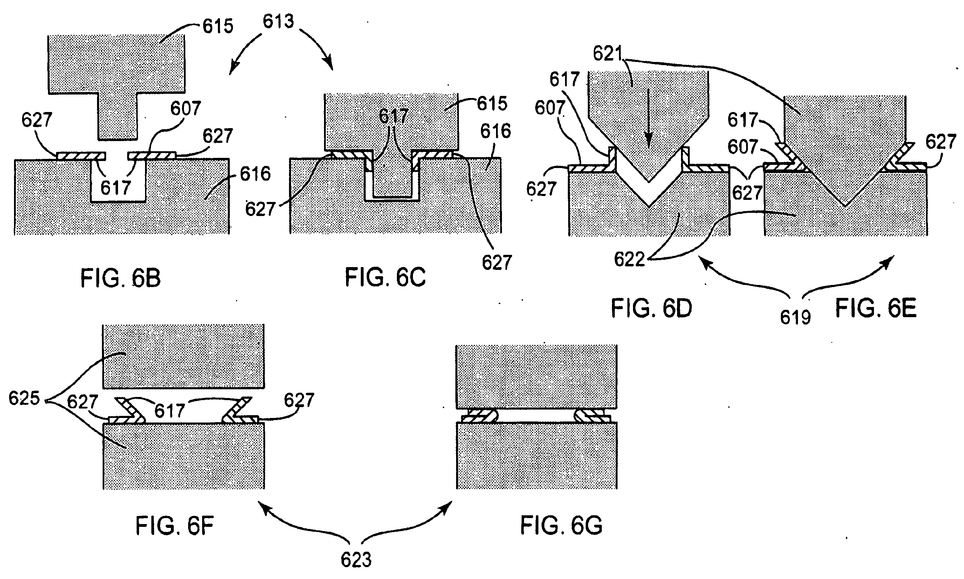

Les figures 6A-6G décrivent en détail un mode de réalisation du procédé illustré en la figure 5, dans le quel on part d'une feuille de métal 601, par exemple en acier inoxydable, ayant une épaisseur h comprise typiquement entre 0,1 et 0,5 mm, par exemple 0,3 mm. En la figure 6A, qui montre le schéma général du procédé, on voit que la feuille 601 est constituée par une bande d'une longueur de plusieurs dizaines de mètres, enroulée en un rouleau de chargement 603. Lors d'une première étape 605 des rondelles 607 en forme de couronne circulaire sont découpées dans la feuille 601 ; des fins ponts de matière 609 relient lesdites rondelles entre elles, de telle sorte qu'elles constituent encore une bande pouvant être entraînée à l'intérieur d'une machine outil. Ensuite a lieu une étape d'emboutissage 611, constituée de trois opérations élémentaires, représentées en détail en les figures 6B et 6C, 6D et 6E, 6F et 6G respectivement:
- lors de la première opération 613, un poinçon cylindrique 615 et une matrice 616 complémentaire audit poinçon 615 soulèvent le bord interne 617 desdites rondelles 607 ;
- lors de la deuxième opération 619, un poinçon conique 621 et une matrice 622 complémentaire audit poinçon 621 commencent à rabattre vers l'extérieur ledit bord interne 617 ; et
- lors de la troisième opération 623, une presse 625 achève le rabattement dudit bord interne 617 sur le bord externe 627.

Après l'emboutissage, une deuxième découpe 629 éventuellement suivie d'un ébavurage 631 permet d'obtenir des branches latérales 45, 47 de la longueur désirée, de séparer lesdites rondelles 607 et d'éliminer lesdits ponts de matière 609. Eventuellement, le procédé se termine par une étape de recuit 633 qui élimine l'écrouissage subi par le métal lors de l'emboutissage et lui permet d'acquérir une élasticité suffisante.

Ce mode particulier de réalisation permet la production en continu d'un grand nombre d'anneaux grâce à la longueur de ladite bande métallique 601, qui peut atteindre plusieurs dizaines, ou même centaines, de mètres. Plusieurs dizaines de milliers d'anneaux peuvent donc être produits avant qu'il soit nécessaire de remplacer ledit rouleau de chargement 603.

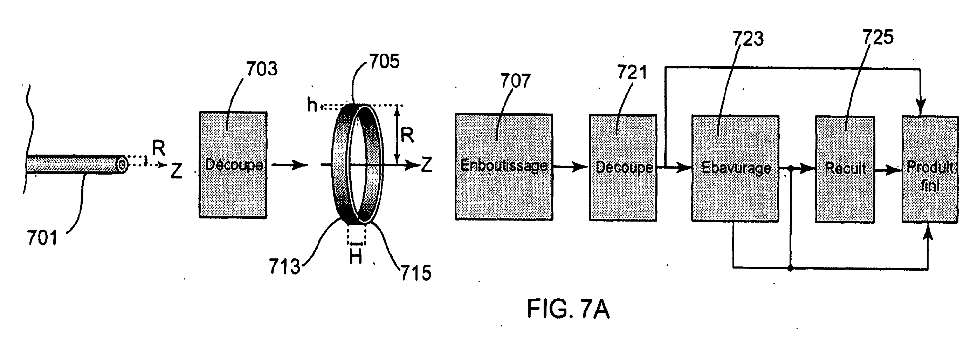

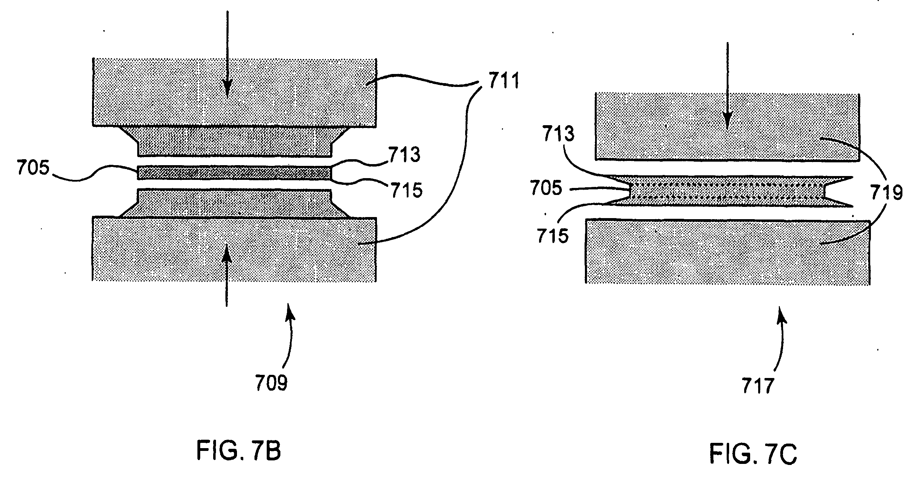

Les figures 7A-7C se réfèrent à un mode de réalisation particulier de l'invention, dans lequel on part d'un tube en métal 701, par exemple en acier inoxydable, ayant une épaisseur h comprise typiquement entre 0,1 et 0,5 mm, par exemple 0,3 mm et un rayon R égal à celui des anneaux à fabriquer, par exemple 25 mm. Ledit tube en métal 701 peut, par exemple, être obtenu par étirage, et donc ne pas présenter de soudure, ou bien être produit par enroulement, soudure et ébavurage d'une feuille métallique En la figure 7A, qui montre le schéma général du procédé, on voit que lors d'une première étape 703, des tranches 705 ayant une épaisseur H typiquement comprise entre 6 et 12 mm, par exemple 10 mm, sont découpés perpendiculairement à l'axe z dudit tube 701. Ensuite a lieu une étape d'emboutissage 707, constituée de deux opérations élémentaires représentées en détail en les figures 7B et 7C respectivement :
- lors de la première opération 709, un double poinçon 711 en forme de cône tronqué auquel est superposé un cylindre rabat vers l'extérieur les bords 713, 715 desdites tranches 705 ; et
- lors de la deuxième opération 717, une presse 719 écrase ladite tranche 705 en rapprochant lesdits bords 713, 715.

Comme dans le procédé illustré en les figures 6A-6G, l'emboutissage est suivi par une découpe 721 des bords externes, un ébavurage 723 et un recuit 725. Le produit fini n'est pas distinguable de celui obtenu par le mode de réalisation particulier de l'invention décrit précédemment. Ce mode particulier de réalisation est particulièrement adapté à la production d'anneaux constitués d'un matériau coûteux, tel qu'un acier spécial, car il permet de minimiser les pertes de matière. Par contre, il est moins bien adapté à des grands volumes de productions que le procédé qui utilise une feuille métallique, car la longueur des tubes est généralement limitée à 3-6 mètres, ce qui rend nécessaire des chargements fréquents de la machine outil qui produit les anneaux. En outre, les tranches 705 constituent des pièces séparées qui doivent être maniées individuellement, alors que les rondelles 607 peuvent être maintenue unies en une bande unique jusqu'à la fin de l'étape 611 d'emboutissage.

Les détails des modes particuliers de réalisation illustrés en les figures 6A-6G et 7A-7C sont donnés à titre d'exemple uniquement et il est possible d'envisager plusieurs variantes des procédés décrits sans sortir du cadre de la présente invention. En particulier, l'étape d'emboutissage 611 ou 707 peut être remplacée par une étape de formage ou hydroformage et peut être effectuée à chaud de manière à éviter l'écrouissage du métal sans avoir à effectuer une étape de recuit 633 ou 725.

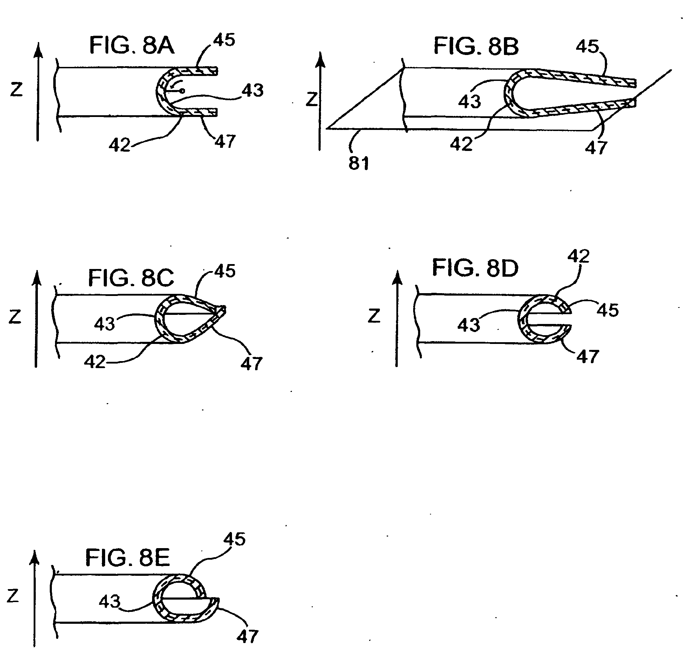

Les figures 8A-8E montrent, à titre d'illustration uniquement et sans aucun caractère limitatif, des exemples des sections 81-84 d'anneaux métalliques fermés 41 qui peuvent être obtenues par le procédé décrit, indépendamment du mode particulier de réalisation choisi. Le plus petit rayon de courbure r du bord interne 43 est particulièrement mis en évidence dans ces figures. Typiquement, pour que l'anneau puisse être utilisé comme anneau de maintien d'un conduit souple à ondulations, ledit rayon de courbure r doit mesurer 1 mm environ, alors que le plus grand rayon de courbure R vaut 25 mm environ.

En particulier, la figure 8A montre une section d'un anneau dans lequel les deux branches latérales 45 et 47 sont parallèles entre elles et perpendiculaires à l'axe de révolution z. Il s'agit du type d'anneau obtenu par les procédés illustrés en les figures 6A-6G et 7A-7C.

La figure 8B montre une section d'un anneau dans lequel les deux branches latérales 45 et 47 convergent symétriquement par rapport à un plan 81 perpendiculaire à l'axe de révolution z. Ce type d'anneau peut être obtenu du type illustré en la figure 8A en ajoutant une ultérieure étape de déformation au procédé de fabrication.

La figure 8C montre une section d'un anneau dans lequel les deux branches latérales 45 et 47 convergent de façon asymétrique et ont une longueur différente.

La figure 8D montre une section d'un anneau dans lequel les deux branches latérales 45 et 47 convergent de façon à former un arc de circonférence correspondant à un angle proche de 360°, c'est à dire que la section de l'anneau est quasi circulaire.

La figure 8E montre une section d'un anneau dans lequel les deux branches latérales 45 et 47 et le fond 43 constituent un contour spiralé.

D'autres formes possibles peuvent facilement être envisagées.

Le procédé de l'invention s'applique également à des anneaux métalliques fermés qui peuvent avoir des dimensions différentes de celles indiquées dans la description et être constitués de matériaux métalliques autres que l'acier inoxydable.

## Revendications

1. Conduit souple à ondulations équipé d'au moins un anneau métallique fermé de maintien, **caractérisé en ce que** ledit anneau métallique fermé (41) a une forme définie par la révolution autour d'un axe (z) d'un contour ouvert (42) ayant une épaisseur (h), comportant un fond arrondi (43) et deux branches latérales (45, 47), ledit fond (43) constituant le bord interne de l'anneau, destiné à être en contact avec ledit conduit souple à ondulations.

2. Conduit souple selon la revendication 1, **caractérisé en ce que** ledit anneau (41) ne comporte pas de soudure.

3. Conduit souple selon l'une des revendications 1 ou 2, **caractérisé en ce que** lesdites deux branches latérales (45, 47) dudit anneau métallique fermé (41) sont parallèles entre elles et perpendiculaires audit axe (z) de révolution.

4. Conduit souple selon l'une des revendications 1 ou 2, **caractérisé en ce que** lesdites deux branches latérales (45, 47) dudit anneau métallique fermé (41) convergent symétriquement par rapport à un plan (81) perpendiculaire audit axe (z) de révolution.

5. Conduit souple selon l'une des revendications 1 ou 2, **caractérisé en ce que** lesdites deux branches latérales (45, 47) dudit anneau métallique fermé (41) convergent de façon non symétrique.

6. Conduit souple selon l'une des revendications 1 ou 2, **caractérisé en ce que** lesdites deux branches latérales (45, 47) dudit anneau métallique fermé (41) convergent de façon à former un arc de circonférence correspondant à un angle proche de 360°.

7. Conduit souple selon l'une des revendications 1 ou 2, **caractérisé en ce que** ledit contour ouvert (42) dudit anneau métallique fermé (41) a une forme spiralée.

8. Conduit souple selon l'une des revendications précédentes, **caractérisé en ce que** ledit fond arrondi (43) dudit anneau métallique fermé (41) présente un rayon de courbure (r) d'au moins 1 mm.

9. Conduit souple selon l'une des revendications précédentes, **caractérisé en ce que** l'épaisseur (h) dudit contour ouvert dudit anneau métallique fermé (41) est plus petite que ledit rayon de courbure (r) dudit fond arrondi (43).

10. Conduit souple selon l'une des revendications précédentes, **caractérisé en ce que** dudit anneau métallique fermé (41) est en acier inoxydable.

11. Procédé de fabrication de conduits souples à ondulations équipés d'au moins un anneau métallique fermé de maintien selon l'une des revendications précédentes, **caractérisé en ce qu'**il comprend une phase de fabrication dudit anneau métallique fermé (41), comportant au moins une étape de déformation (52, 611, 613, 619, 623, 707, 709, 717) d'une pièce (607, 705) en forme de rondelle (607) ou de cylindre (705) présentant deux bords opposés (617, 627, 713, 715), de manière à produire un rapprochement desdits deux bords opposés (607, 617, 713, 715) et donner ainsi à ladite pièce (607, 705) une forme concave vers l'extérieur dudit anneau (41).

12. Procédé de fabrication selon la revendication 11, **caractérisé en ce que** ladite pièce (607) est en forme de rondelle, lesdits bords opposés (617, 627) constituant un bord interne (617) et un bord externe (627), et **en ce que** ladite étape de déformation (52, 611, 613, 619, 623) comporte le soulèvement dudit bord interne (617) et son rabattement sur ledit bord externe (627).

13. Procédé de fabrication selon l'une des revendications 11 ou 12, **caractérisé en ce que** ladite pièce (607) en forme de rondelle est découpée d'une feuille de métal (601).

14. Procédé de fabrication selon la revendication 11, **caractérisé en ce que** ladite pièce (705) en forme de cylindre est une tranche découpée d'un tube de métal (701).

15. Procédé de fabrication selon l'une des revendications 11 ou 14, **caractérisé en ce que** ladite étape de déformation (52, 707, 709, 717) de ladite pièce (705) en forme de cylindre comporte le rabattement vers l'extérieur desdits deux bords opposés (713, 715), ce qui conduit à leur rapprochement et à l'écrasement de ladite pièce (705).

16. Procédé de fabrication selon l'une des revendications 11 à 15, **caractérisé en ce qu'**il comporte également une opération de découpe (53, 629, 721) desdits bords opposés (617 et 627, 713 et 715).

17. Procédé de fabrication selon l'une des revendications 11 à 16, **caractérisé en ce qu'**il comporte également une opération d'ébavurage (54, 631, 723) desdits bords opposés (617 et 627, 713 et 715).

18. Procédé de fabrication selon l'une des revendications 11 à 17, **caractérisé en ce qu'**il comporte également une opération de recuit (55, 633, 725) de ladite pièce (607, 715).

19. Procédé de fabrication selon l'une des revendications 11 à 18, **caractérisé en ce que** ladite étape de déformation (52, 611, 613, 619, 623, 707, 709, 717) est effectuée par emboutissage.

20. Procédé de fabrication selon l'une des revendications 11 à 19, **caractérisé en ce que** ladite étape de déformation (52, 611, 613, 619, 623, 707, 709, 717) est effectuée par formage.

21. Procédé de fabrication selon l'une des revendications 11 à 20, **caractérisé en ce que** ladite étape de déformation (52, 611, 613, 619, 623, 707, 709, 717) est effectuée par hydroformage.

22. Procédé de fabrication selon l'une des revendications 11 à 21, **caractérisé en ce que** ladite étape de déformation (52, 611, 613, 619, 623, 707, 709, 717) est effectuée à chaud.

## Patentansprüche

1. Biegsame gewellte Leitung mit zumindest einem geschlossenen metallischen Verstärkungsring, **dadurch gekennzeichnet, dass** der geschlossene metallische Ring (41) eine durch die Drehung einer offenen Kontur (42) mit einer Dicke (h), welche einen gerundeten Boden (43) und zwei laterale Arme (45, 47) aufweist, um eine Achse (z) definierte Form aufweist, wobei der Boden (43) den inneren Rand des Rings bildet, welcher dazu bestimmt ist, in Kontakt mit der biegsamen gewellten Leitung zu sein.

2. Biegsame Leitung nach Anspruch 1, **dadurch gekennzeichnet, dass** der Ring (41) keine Schweißnaht aufweist.

3. Biegsame Leitung nach einem der Ansprüche 1 oder 2, **dadurch gekennzeichnet, dass** die zwei lateralen Arme (45, 47) des geschlossenen metallischen Rings (41) parallel zueinander und senkrecht zu der Drehachse (z) sind.

4. Biegsame Leitung nach einem der Ansprüche 1 oder 2, **dadurch gekennzeichnet, dass** die zwei lateralen Arme (45, 47) des geschlossenen metallischen Rings (41) symmetrisch in Bezug auf eine Ebene (81) senkrecht zu der Drehachse (z) konvergieren.

5. Biegsame Leitung nach einem der Ansprüche 1 oder 2, **dadurch gekennzeichnet, dass** die zwei lateralen Arme (45, 47) des geschlossenen metallischen Rings (41) in nicht symmetrischer Weise konvergieren.

6. Biegsame Leitung nach einem der Ansprüche 1 oder 2, **dadurch gekennzeichnet, dass** die zwei lateralen Arme (45, 47) des geschlossenen metallischen Rings (41) in einer Weise konvergieren, dass sie einen Umfangsbogen bilden, welcher einem Winkel nahe 360° entspricht.

7. Biegsame Leitung nach einem der Ansprüche 1 oder 2, **dadurch gekennzeichnet, dass** die offene Kontur (42) des geschlossenen metallischen Rings (41) eine Spiralform aufweist.

8. Biegsame Leitung nach einem der vorhergehenden Ansprüche, **dadurch gekennzeichnet, dass** der gerundete Boden (43) des geschlossenen metallischen Rings (41) einen Krümmungsradius (r) von mindestens 1 mm aufweist.

9. Biegsame Leitung nach einem der vorhergehenden Ansprüche, **dadurch gekennzeichnet, dass** die Dicke (h) der offenen Kontur des geschlossenen metallischen Rings (41) kleiner ist als der Krümmungsradius des gerundeten Bodens (43).

10. Biegsame Leitung nach einem der vorhergehenden Ansprüche, **dadurch gekennzeichnet, dass** der geschlossene metallische Ring (41) aus Edelstahl ist.

11. Verfahren zur Herstellung von biegsamen gewellten Leitungen mit mindestens einem geschlossenen metallischen Verstärkungsring gemäß einem der vorhergehenden Ansprüche, **dadurch gekennzeichnet, dass** es eine Phase der Herstellung des geschlossenen metallischen Rings (41) umfasst, welche mindestens einen Schritt der Deformation (52, 611, 613, 619, 623, 707, 709, 717) eines Teils (607, 705) in Form einer Scheibe (607) oder eines Zylinders (705) mit zwei gegenüberliegenden Rändern (617, 627, 713, 715) in einer Weise umfasst, eine Annäherung der zwei gegenüberliegenden Ränder (607, 617, 713, 715) zu erzeugen und somit dem Teil (607, 705) eine zu dem Äußeren des Rings (41) hin konkave Form zu geben.

12. Verfahren zur Herstellung nach Anspruch 11, **dadurch gekennzeichnet, dass** das Teil (607) in Form einer Scheibe vorliegt, wobei die gegenüberliegenden Ränder (617, 627) einen inneren Rand (617) und einen äußeren Rand (627) bilden, und dass der Schritt der Deformation (52, 611, 613, 619, 623) die Anhebung des inneren Randes (617) und sein Herunterklappen auf den äußeren Rand (627) umfasst.

13. Verfahren zur Herstellung nach einem der Ansprüche 11 oder 12, **dadurch gekennzeichnet, dass** das Teil (607) in Form einer Scheibe aus einer Metallfolie (601) ausgestanzt wird.

14. Verfahren zur Herstellung nach Anspruch 11, **dadurch gekennzeichnet, dass** das Teil (705) in Form eines Zylinders ein von einem Metallrohr (701) abgeschnittener Abschnitt ist.

15. Verfahren zur Herstellung nach einem der Ansprüche 11 oder 14, **dadurch gekennzeichnet, dass** der Schritt der Deformation (52, 707, 709, 717) des Teils (705) in Form eines Zylinders das Herausklappen nach außen der zwei gegenüberliegenden Ränder (713, 715) umfasst, was zu ihrer Annäherung und zum Zusammendrücken des Teils (705) führt.

16. Verfahren zur Herstellung nach einem der Ansprüche 11-15, **dadurch gekennzeichnet, dass** es zudem einen Vorgang des Zuschneidens (53, 629, 721) der gegenüberliegenden Ränder (617 und 627, 713 und 715) umfasst.

17. Verfahren zur Herstellung nach einem der Ansprüche 11-16, **dadurch gekennzeichnet, dass** es zudem einen Vorgang des Entgratens (54, 631, 723) der gegenüberliegenden Ränder (617 und 627, 713 und 715) umfasst.

18. Verfahren zur Herstellung nach einem der Ansprüche 11-17, **dadurch gekennzeichnet, dass** es zudem einen Vorgang des Glühens (55, 633, 725) des Teils (607, 715) umfasst.

19. Verfahren zur Herstellung nach einem der Ansprüche 11-18, **dadurch gekennzeichnet, dass** der Schritt der Deformation (52, 611, 613, 619, 623, 707, 709, 717) durch einen Ziehvorgang durchgeführt wird.

20. Verfahren zur Herstellung nach einem der Ansprüche 11-19, **dadurch gekennzeichnet, dass** der Schritt der Deformation (52, 611, 613, 619, 623, 707, 709, 717) durch Formen durchgeführt wird.

21. Verfahren zum Herstellen nach einem der Ansprüche 11-20, **dadurch gekennzeichnet, dass** der Schritt der Deformation (52, 611, 613, 619, 623, 707, 709, 717) durch Hydroformen durchgeführt wird.

22. Verfahren zur Herstellung nach einem der Ansprüche 11-21, **dadurch gekennzeichnet, dass** der Schritt der Deformation (52, 611, 613, 619, 623, 707, 709, 717) im heißen Zustand durchgeführt wird.

## Claims

1. Corrugated flexible pipe equipped with at least one closed metal retaining ring, **characterized in that** the said closed metal ring (41) has a shape defined by the revolution about an axis (z) of an open profile (42) having a thickness (h), comprising a rounded bottom (43) and two lateral branches (45, 47), the said bottom (43) constituting the internal edge of the ring, intended to be in contact with the said corrugated flexible pipe.

2. Flexible pipe according to Claim 1, **characterized in that** the said ring (41) includes no weld.

3. Flexible pipe according to either of Claims 1 and 2, **characterized in that** the said two lateral branches (45, 47) of the said closed metal ring (41) are parallel to each other and perpendicular to the said axis (z) of revolution.

4. Flexible pipe according to either of Claims 1 and 2, **characterized in that** the said two lateral branches (45, 47) of the said closed metal ring (41) converge symmetrically with respect to a plane (81) perpendicular to the said axis (z) of revolution.

5. Flexible pipe according to either of Claims 1 and 2, **characterized in that** the said two lateral branches (45, 47) of the said closed metal ring (41) converge non-symmetrically.

6. Flexible pipe according to either of Claims 1 and 2, **characterized in that** the said two lateral branches (45, 47) of the said closed metal ring (41) converge so as to form a circumferential arc corresponding to an angle close to 360°.

7. Flexible pipe according to either of Claims 1 and 2, **characterized in that** the said open profile (42) of the said closed metal ring (41) has a spiralled shape.

8. Flexible pipe according to one of the preceding claims, **characterized in that** the said rounded bottom (43) of the said closed metal ring (41) has a radius of curvature (r) of at least 1 mm.

9. Flexible pipe according to one of the preceding claims, **characterized in that** the thickness (h) of the said open profile of the said closed metal ring (41) is smaller than the said radius of curvature (r) of the said rounded bottom (43).

10. Flexible pipe according to one of the preceding claims, **characterized in that** the said closed metal ring (41) is made of stainless steel.

11. Process for manufacturing corrugated flexible pipes equipped with at least one closed metal retaining ring according to one of the preceding claims, **characterized in that** it comprises a phase of manufacturing the said closed metal ring (41), comprising at least one deformation step (52, 611, 613, 619, 623, 707, 709, 717) in which a workpiece (607, 705) in the form of a washer (607) or in the form of a cylinder (705), having two opposed edges (617, 627, 713, 715) is deformed so as to bring the said two opposed edges (607, 617, 713, 715) together and thus give the said workpiece (607, 705) a concave shape with the concavity facing the outside of the said ring (41).

12. Manufacturing process according to Claim 11, **characterized in that** the said workpiece (607) is in the form of a washer, the said opposed edges (617, 627) constituting an internal edge (617) and an external edge (627), and **in that** the said deformation step (52, 611, 613, 619, 623) includes an operation whereby the said internal edge (617) is turned up and then turned over onto the said external edge (627).

13. Manufacturing process according to either of Claims 11 and 12, **characterized in that** the said washer-shaped workpiece (607) is cut from a metal sheet (601).

14. Manufacturing process according to Claim 11, **characterized in that** the said cylinder-shaped workpiece (705) is a slice cut from a metal tube (701).

15. Manufacturing process according to either of Claims 11 and 14, **characterized in that** the said deformation step (52, 707, 709, 717) carried out on the said cylinder-shaped workpiece (705) includes an operation whereby the said two opposed edges (713, 715) are turned over towards the outside, resulting in them coming closer together and in the said workpiece (705) being flattened.

16. Manufacturing process according to one of Claims 11 to 15, **characterized in that** it also includes an operation (53, 629, 721) of cutting the said opposed edges (617 and 627, 713 and 715).

17. Manufacturing process according to one of Claims 11 to 16, **characterized in that** it also includes an operation (54, 631, 723) of deburring the said opposed edges (617 and 627, 713 and 715).

18. Manufacturing process according to one of Claims 11 to 17, **characterized in that** it also includes an operation (55, 633, 725) of annealing the said workpiece (607, 715).

19. Manufacturing process according to one of Claims 11 to 18, **characterized in that** the said deformation step (52, 611, 613, 619, 623, 707, 709, 717) is carried out by drawing.

20. Manufacturing process according to one of Claims 11 to 19, **characterized in that** the said deformation step (52, 611, 613, 619, 623, 707, 709, 717) is carried out by forming.

21. Manufacturing process according to one of Claims 11 to 20, **characterized in that** the said deformation step (52, 611, 613, 619, 623, 707, 709, 717) is carried out by hydroforming.

22. Manufacturing process according to one of Claims 11 to 21, **characterized in that** the said deformation step (52, 611, 613, 619, 623, 707, 709, 717) is carried out hot.
